# EUROPEAN PATENT SPECIFICATION

(11) **EP 0 877 900 B1**
(45) Date of publication and mention of the grant of the patent: **22.10.2003**
(21) Application number: 97904467.4
(22) Date of filing: 10.02.1997
(51) Int. Cl.: F21V 17/06

(54) **FLIGHT OBSTACLE LIGHT**
HINDERNISFEUER FÜR FLUGFAHRT
FEU D'OBSTACLE POUR LA NAVIGATION AERIENNE

(30) Priority: 09.02.1996 FI 960597
(43) Date of publication of application: 18.11.1998
(73) Proprietor: Obelux Oy, 00380 Helsinki (FI)
(72) Inventor: SIPINEN, Jyrki, FIN-00200 Helsinki (FI)
(74) Representative: Järveläinen, Pertti Tauno Juhani
(86) International application number: FI9700083
(87) International publication number: WO97029320

(56) References cited:
- WO-A-95/19525
- WO-A-95/23313
- DE-A- 3 806 217
- US-A- 4 439 818
- US-A- 4 761 720
- US-A- 5 321 593
- US-A- 5 404 282

## Description

The present invention relates to a flight obstacle light as defined in the introductory part of claim 1. The function of the light is to warn pilots about flight obstacles, such as high buildings, radio masts and chimneys.

The electrical, photometric and mechanical specifications of flight obstacle lights are given, e.g. in the ICAO (International Civil Aviation Organization) Aerodromes Annex 14 volume 1, Second Edition, July 1995, chapter 6 "Low-intensity obstacle light", and in the FAA (Federal Aviation Administration) AA No:150/5345-43E "Specification for Obstruction Lighting Equipment". According to these specifications, the flight obstacle light has to be able to produce, i.a. a horizontal beam spread of 360 degrees and a vertical beam spread of more than 10 degrees. Further, the intensity has to be more than 10 cd of red light, and the wave length of the red colour must fall within the range of 610 - 670 nm.

The flight obstacle lights currently in use are typically 100 W incandescent lamps housed inside red protective covers. The main drawbacks of these common flight obstacle lights are high power consumption and short service intervals. Moreover, the rather high AC voltage of e.g. up to 230 VAC, required by these lights, may turn them a hazard should they become defective.

The object of the invention described here is to eliminate the drawbacks of the common technique and to create a totally new type of flight obstacle light in which the light source consists of several LEDs (Light Emitting Diodes). Such lights are disclosed in WO 95/19525 and WO 95/23313. WO 95/19525 discloses a light signalling device including a series of stacked electrical circuits with light-emitting diodes (LEDs) evenly distributed around the periphery thereof. WO 95/23313 discloses a warning light comprising a base, a source of light and a cover. The source of light consists of LEDs that are connected next to each other onto a circuit board section in several layers in order to achieve the lighting pattern and intensity required.

The present invention is characterised in that it comprises an electronically controlled stabilizer unit, such as a constant current or constant voltage power supply, that is connected to the light to stabilize the lighting intensity, and that protecting components, such as Zener diodes, are connected in parallel with the LEDs or that the LEDs are connected to more than one branch so that in a failure of one LED the light continues to operate.

A light having a source of light consisting of LEDs requires low input voltages, e.g. 48 V, which makes it very safe. A further advantage is that it
uses DC voltages and can therefore be easily used even in remote locations, such as base stations of a cellular telephone network, where batteries may be used to generate the DC voltages required. Furthermore, the power consumption of the light is very low, typically at the level of 10 W, which is remarkably lower than that of the incandescent lamp lights. Moreover, its lifetime is several times longer than that of the incandescent lamps. This reduces the need for servicing and decreases maintenance costs. In addition, the present invention is small and lightweight.

In the following, the invention is described in detail by the aid of examples and by referring to the attached drawings, in which
Figure 1 presents the flight obstacle light,
Figure 2 presents the flight obstacle light of figure 1 when fixed to a terminal box,
Figure 3 presents the flight obstacle light of figure 1 when fixed to another terminal box, and
Figures 4a to 4c present the LED connections used in this invention.

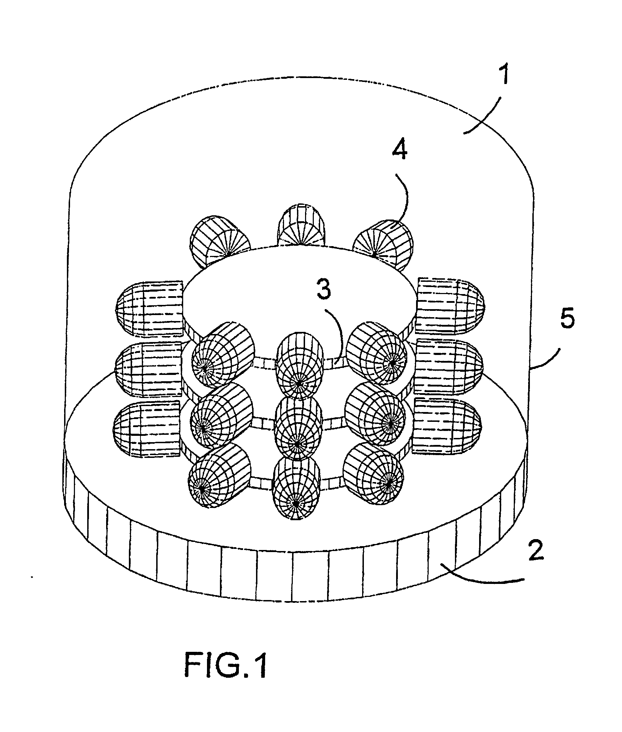

The flight obstacle light depicted in figure 1 has a base (2) with which the light can be fixed to the terminal box below it. On top of the base, there is an electronics part that consists of several, e.g. three pieces like in figure 1, disk-shaped circuit boards (3) containing the control electronics for the light. Red LEDs are evenly attached to the periphery of each round circuit board. The number of LEDs must be adequate, e.g. in figure 1 eight LEDs per circuit board which totals 24 LEDs, to guarantee both the highting intensity required, the minimum being 10 cd, and the lighting pattern desired so that the flight obstacle light produces a light with horizontal beam spread of 360 degrees and a vertical beam spread of 10 degrees or more, e.g. 30 degrees. The lighting pattern required can be achieved by using LEDs that provide a beam spread of adequate width.

The light uses low DC voltages, such as 12 V, 24 V or ideally 48 V, received e.g. from a battery via the terminal box. The electronics part contains one or more constant current or constant voltage power supplies to ensure stable lighting intensity. It is also possible to install a photocell to the light so that the light will turn on controlled by the photocell when it is dark, or to use a flash controller to make the light flash. The LEDs are housed inside an uncoloured protective glass cover (5).

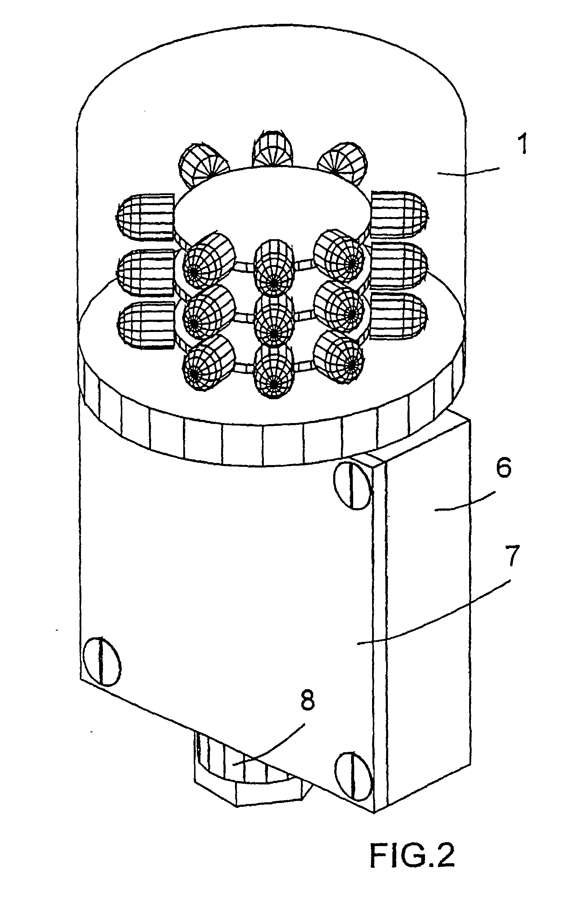

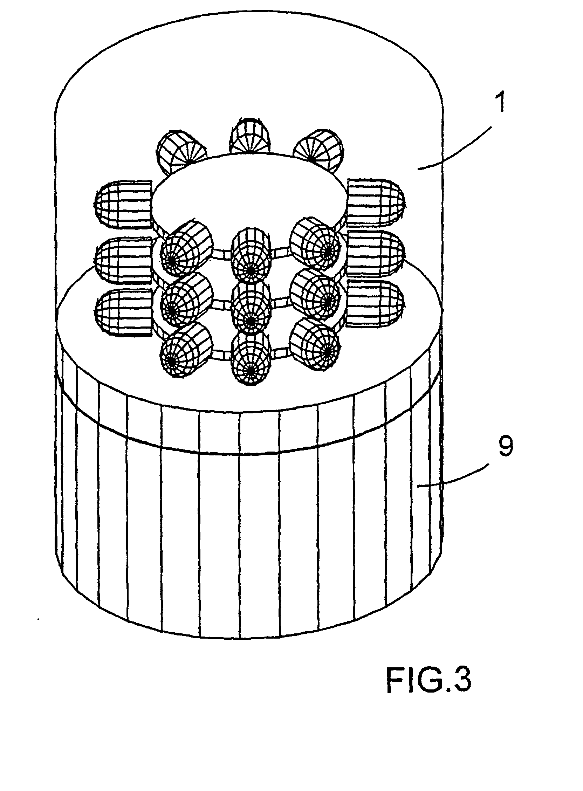

Figure 2 presents the flight obstacle light (1) fixed on top of a terminal box (6). The terminal box contains a cover piece (7) fixed with screws, and on the bottom, a lead-through for power supply cables. In figure 3, both the terminal box and the base are of cylindrical shape.

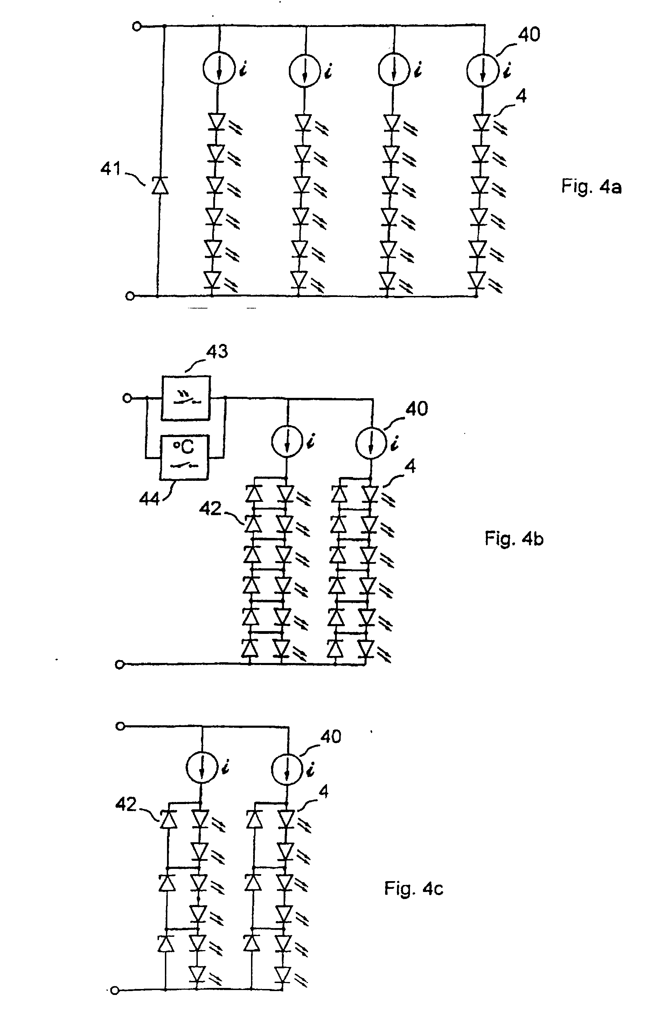

Figure 4a shows 24 LEDs (4) that have been connected into four branches each of which can be located on separate circuit boards (3). A constant current power supply (40) have been connected to each branch, and there is also a Zener diode (41) at the power supply input to protect the light against transient voltages. Instead of a Zener it is possible to use a varistor for transient and disturbance protection.

In figure 4b, the LEDs (4) have been divided into two branches, and a Zener diode (42) has been connected in parallel with every LED (4). This enables the current flow in case an LED became defected. A failure of one LED will thus have no effect on the other ones, but the rest of the LEDs in the same branch will continue to operate normally. Further, at the input there are a photocell (43) and a temperature sensor (44) connected in parallel. They control the light to be continuously lit not only when it is dark but also when it is cold (i.e. when the temperature falls under a certain limit); this prevents moisture from being condensed inside the cover and the light to be damaged.

In figure 4c, a Zener diode (42), which enables the current flow if an LED fails, has been connected in parallel with two LEDs (4). This ensures that most of the LEDs of the same branch will operate normally, e.g. four out of six LEDs in figure 4c, even though one LED would become defected.

It is obvious to a person skilled in the art that different applications of the invention are not restricted to the examples described above, but they may vary within the scope of the claims presented later on. Instead of disk-shaped circuit boards, it is possible to use a flexible elastic circuit board which is twisted into a cylindrical shape and onto which the LEDs are connected by soldering. The desired lighting pattern can be achieved by bending the elastic circuit board, by changing its shape and altering the placement of the LEDs on the circuit board. Further, it is possible to modify the connection so that the light can be fixed directly to the base of an incandescent lamp, e.g. E27. When this is done, it has to be borne in mind, however, that the LEDs require a DC power supply.

## Claims

1. Flight obstacle light to warn pilots about flight obstacles, said light comprising a base (2), a source of light that produces a horizontal beam spread of 360 degrees and a vertical beam spread of more than 10 degrees, and a cover (5),
wherein the source of light consists of LEDs (4) that are connected next to each other onto a circuit board section (3) in one or more layers in order to achieve the lighting pattern and intensity required,
**characterized in**
**that** it comprises an electronically controlled stabilizer unit (40), such as a constant current or constant voltage power supply, that is connected to the light to stabilize the lighting intensity, and
**that** protecting components, such as Zener diodes (42), are connected in parallel with the LEDs in order to enable the current flow in a failure of one or several LEDs so that the light continues to operate.

2. Flight obstacle light (1) according to claim 1, **characterized in that** a protecting component has been connected in parallel with every LED (4).

3. Flight obstacle light (1) according to claim 1, **characterized in that** a protecting component has been connected in parallel with at least two LEDs (4).

4. Flight obstacle light (1) according to claim 1, **characterized in that** the LEDs are connected onto one or more elastic or flexible circuit board, so that the lighting pattern required can be achieved by bending the circuit board, by changing its shape and by altering the placement of LEDs on it.

5. Flight obstacle light (1) according to claim 1, **characterized in that** it allows a photocell to be connected for controlling the light and forcing it to turn on when the ambient light intensity decreases below a predefined level.

6. Flight obstacle light (1) according to claim 1, **characterized in that** it uses DC voltages lower than 60 V, ideally 12 V or 48 V.

## Patentansprüche

1. Hindernisfeuer für die Luftfahrt zum Warnen von Piloten vor Flughindemissen, wobei das Feuer eine Basis (2), eine Lichtquelle, die ein horizontales Strahlenbündel von 360 ° und ein vertikales Strahlenbündel von mehr als 10 ° erzeugt, und eine Abdeckung (5) aufweist,
wobei die Lichtquelle aus LEDs (4) besteht, die benachbart zueinander auf einem Abschnitt (3) einer Schaltung in einer oder mehreren Schichten verbunden sind, um gewünschte Beleuchtungsmuster und -intensitäten zu erzielen,
**dadurch gekennzeichnet,**
**dass** es eine elektronisch gesteuerte Stabilisierungseinheit (40) aufweist, wie beispielsweise eine Stromversorgung für konstanten Strom oder konstante Spannung, die mit dem Feuer verbunden ist, um die Beleuchtungsintensität zu stabilisieren, und
**dass** Schutzkomponenten, wie beispielsweise Zenerdioden (42), parallel mit den LEDs verbunden sind, um es dem Stromfluss zu ermöglichen, beim Ausfall von einer oder mehreren LEDs so zu fließen, dass das Feuer weiterhin in Betrieb bleibt.

2. Hindernisfeuer (1) für die Luftfahrt nach Anspruch 1,
**dadurch gekennzeichnet,**
**dass** zu jeder LED (4) eine Schutzkomponente verbunden ist.

3. Hindernisfeuer (1) für die Luftfahrt nach Anspruch 1,
**dadurch gekennzeichnet,**
**dass** parallel zu wenigstens zwei LEDs (4) eine Schutzkomponente verbunden ist.

4. Hindernisfeuer (1) für die Luftfahrt nach Anspruch 1,
**dadurch gekennzeichnet,**
**dass** die LEDs auf einer oder mehreren elastischen oder flexiblen Schaltungen verbunden sind, so dass das gewünschte Beleuchtungsmuster durch das Biegen der Schaltung, durch das Wechseln ihrer Form und durch Veränderung der Anordnung von LEDs auf dieser erreicht werden kann.

5. Hindernisfeuer (1) für die Luftfahrt nach Anspruch 1,
**dadurch gekennzeichnet,**
**dass** es einer Fotozelle erlaubt, zum Steuern des Feuers und zum Veranlassen des Anschaltens, wenn die Umgebungslichtintensität unter ein vorbestimmtes Niveau sinkt, verbunden zu werden.

6. Hindernisfeuer (1) für die Luftfahrt nach Anspruch 1,
**dadurch gekennzeichnet,**
**dass** es eine Gleichspannung von weniger als 60 Volt einsetzt, idealer Weise 12 Volt oder 48 Volt.

## Revendications

1. Feu d'obstacle pour la navigation aérienne destiné à avertir des pilotes de la présence d'obstacles de navigation aérienne, ledit feu comprenant un socle (2), une source de lumière qui produit un faisceau horizontal étalé sur 360 degrés et un faisceau vertical étalé sur plus de 10 degrés, et un capot (5),
dans lequel la source de lumière est constituée de diodes électroluminescentes (LED) (4) qui sont connectées à proximité les unes des autres à une section de carte de circuit (3) dans une ou plusieurs couches afin d'obtenir le diagramme et l'intensité d'éclairement requis,
**caractérisé en ce que**
il comprend une unité stabilisatrice commandée électroniquement (40) telle qu'une alimentation électrique à courant constant ou à tension constante qui est connectée au feu pour stabiliser l'intensité d'éclairement, et
**en ce que** des composants de protection tels que des diodes Zener (42) sont connectés en parallèle avec les diodes électroluminescentes afin de permettre le passage d'un courant en cas de panne d'une ou plusieurs diodes électroluminescentes pour que le feu continue de fonctionner.

2. Feu d'obstacle pour la navigation aérienne (1) selon la revendication 1, **caractérisé** en qu'un composant de protection a été connecté en parallèle avec chaque diode électroluminescente (4).

3. Feu d'obstacle pour la navigation aérienne (1) selon la revendication 1, **caractérisé** en qu'un composant de protection a été connecté en parallèle avec au moins deux diodes électroluminescentes (4).

4. Feu d'obstacle pour la navigation aérienne (1) selon la revendication 1, **caractérisé** en que les diodes électroluminescentes sont connectées à une ou plusieurs cartes de circuit élastiques ou flexibles, de sorte que le diagramme d'éclairement requis peut être obtenu lors d'une courbure de la carte de circuit, par modification de sa forme et par altération du positionnement des diodes électroluminescentes sur celle-ci.

5. Feu d'obstacle pour la navigation aérienne (1) selon la revendication 1, **caractérisé** en qu'il permet de connecter une cellule photoélectrique pour commander le feu et le forcer à s'allumer lorsque l'intensité de la lumière ambiante s'abaisse en dessous d'un niveau prédéfini.

6. Feu d'obstacle pour la navigation aérienne (1) selon la revendication 1, **caractérisé** en qu'il utilise des tensions continues inférieures à 60 V, et idéalement, de 12 V ou de 48 V.
